# DEMANDE DE BREVET EUROPEEN

(11) **EP 2 743 218 A1**
(43) Date de publication de la demande: **18.06.2014**
(21) Numéro de dépôt: 13197084.0
(22) Date de dépôt: 13.12.2013
(51) Int. Cl.: B65G 69/00

(54) **Equipement de sécurite pour quai, système et procédés afférents**

(30) Priorité: 13.12.2012 FR 1262028
(71) Demandeur: Fauriat, Bruno Jean Daniel, 69640 Cogny (FR); Laval, Christophe, 01480 Fareins (FR)
(72) Inventeur: FAURIAT, Bruno, Jean, Daniel, 69640 COGNY (FR)
(74) Mandataire: Weber, Jean-François

(57) **Abrégé**

L'invention concerne un équipement pour équiper un quai (1) en regard duquel un véhicule est destiné à venir se positionner pour qu'une passerelle de transbordement soit déployée entre le quai (1) et le véhicule, ledit équipement comprenant un premier butoir (8), fixé sur ledit nez de quai (2), et monté mobile entre une configuration de sécurité et une configuration de chargement/déchargement, au moins une portion dudit premier butoir (8) étant soumise, lors du mouvement du premier butoir (8) entre ses configurations de sécurité et de chargement/déchargement, à un déplacement, ledit premier butoir (8) étant conçu pour que lesdits premier butoirs (8) et passerelle de transbordement puissent se déplacer indépendamment l'un de l'autre, le départ du véhicule permettant de faire revenir le premier butoir en configuration de sécurité de façon automatique.

## Description

La présente invention se rapporte au domaine technique général du chargement/déchargement de marchandises dans/hors d'un véhicule routier, tel qu'un camion, à partir d'un quai, lequel est éventuellement pourvu d'un niveleur permettant d'établir une rampe d'accès entre l'intérieur du véhicule à charger/décharger et le quai.

La présente invention concerne plus particulièrement un équipement de sécurité conçu pour équiper un quai de chargement/déchargement routier, ledit quai comprenant un nez de quai qui s'élève sensiblement verticalement et en regard duquel un véhicule à charger/décharger est destiné à venir se positionner pour qu'une passerelle de transbordement mobile soit déployée entre le quai et le véhicule, ledit équipement de sécurité comprenant au moins un premier butoir pour le véhicule, conçu pour être fixé sur ledit nez de quai.

La présente invention concerne également un système de chargement/déchargement sécurisé comprenant :
- un quai de chargement/déchargement routier, ledit quai comprenant un nez de quai qui s'élève sensiblement verticalement et en regard duquel un véhicule à charger/décharger est destiné à venir se positionner,
- une passerelle de transbordement mobile destinée à être déployée entre le quai et le véhicule,
- au moins un premier butoir pour le véhicule, ledit premier butoir étant fixé sur ledit nez de quai.

La présente invention concerne par ailleurs un procédé de sécurisation d'un quai de chargement/déchargement routier, ledit quai comprenant un nez de quai s'élevant sensiblement verticalement et en regard duquel un véhicule à charger/décharger est destiné à venir se positionner pour qu'une passerelle de transbordement mobile soit déployée entre le quai et le véhicule, ledit procédé comprenant une étape de fixation audit nez de quai d'au moins un premier butoir pour le véhicule.

La présente invention concerne enfin un procédé de chargement/déchargement d'un véhicule routier à partir d'un quai de chargement/déchargement routier, ledit quai comprenant un nez de quai s'élevant sensiblement verticalement et en regard duquel un véhicule à charger/décharger est destiné à venir se positionner pour qu'une passerelle de transbordement mobile soit déployée entre le quai et le véhicule, au moins un premier butoir pour ledit véhicule routier étant fixé audit nez de quai.

Les plates-formes logistiques routières comportent généralement un (ou plusieurs) bâtiments munis de différentes ouvertures qui débouchent chacune sur un quai de chargement/déchargement donnant sur l'extérieur. Chacun de ces quais comporte une paroi verticale appelée « *nez de quai* », au pied de laquelle s'étend un emplacement prédéterminé destiné à accueillir un camion à charger ou à décharger. Chaque quai comprend en outre une fosse ménagée dans le sol du quai pour accueillir un dispositif de transbordement mobile, du genre pont basculant ou niveleur de quai. Un tel niveleur comporte habituellement une rampe basculante pourvue à son extrémité d'une lèvre mobile qui se déploie pour venir se projeter en avant du nez de quai afin de reposer sur le plateau du camion à charger, et constituer ainsi avec la rampe un plancher continu qui permet d'accéder à l'intérieur du camion à partir du quai. Les quais de chargement connus sont également équipés de deux butoirs fixés au nez de quai, de part et d'autre du niveleur. Ces butoirs, qui présentent généralement une profondeur de l'ordre de 100 mm, permettent d'empêcher un camion de percuter directement le nez de quai en cas de fausse manoeuvre, ce qui pourrait endommager le camion lui-même, mais également le nez de quai ou le niveleur. Les opérations de chargement/déchargement se déroulent généralement de la façon suivante. Un camion se dirige en marche arrière vers le nez de quai, au droit de ce dernier, jusqu'à venir en butée contre les deux butoirs précités. Afin de combler l'espace vide situé entre le plateau du camion à charger et le quai et compenser l'éventuelle différence de niveau entre le quai et le plateau du véhicule à charger, la rampe du niveleur est alors inclinée (grâce à l'action d'un vérin hydraulique ou à gaz, ou d'un ressort) et la lèvre déployée (par pivotement dans le cas d'une lèvre basculante ou par coulissement dans le cas d'une lèvre télescopique) pour venir ensuite reposer sur le plateau du camion et former ainsi avec la rampe un plancher d'accès à l'intérieur du camion.

Un tel agencement donne globalement satisfaction, mais n'en présente pas moins des inconvénients sérieux, particulièrement en matière de sécurité. Plus précisément, il existe un risque de voir un opérateur (chauffeur ou autre) présent au pied du nez de quai se faire écraser par le camion contre le nez de quai, lors du recul dudit camion. Dans une telle situation, les butoirs susvisés ne sont en effet d'aucun secours, puisque leur faible profondeur d'environ 100 mm ne ménage pas un espace libre suffisant pour protéger l'opérateur.

Afin de remédier à ce risque majeur, certaines instances officielles ont récemment préconisé de mettre en oeuvre des butoirs plus profonds, pour ménager un espace de sécurité suffisant entre l'arrière du camion et le nez de quai. Il est ainsi recommandé en France et dans d'autres pays de recourir à des butoirs dont la profondeur est de 500 mm. Si un tel dimensionnement des butoirs permet effectivement de créer un refuge de protection au pied du quai, il induit toutefois des inconvénients extrêmement sérieux.

Tout d'abord, la mise en oeuvre de butoirs plus profonds contribue bien entendu à ce que le camion à charger/décharger soit plus éloigné du quai qu'il ne l'était auparavant (avec des butoirs de 100 mm), ce qui implique que le niveleur doit se projeter encore plus en avant du nez de quai. Ceci est de nature à augmenter le risque de voir un opérateur (piéton ou conducteur d'engin) chuter depuis le quai pendant les opérations de chargement/déchargement, dans la mesure où la portion du niveleur qui s'étend au-dessus du vide, entre le quai et le camion, est forcément plus importante.

Cet accroissement de la distance entre le quai et le camion, du fait de l'accroissement de la profondeur des butoirs, pose également un problème lorsqu'un sas d'étanchéité est utilisé entre l'ouverture à l'arrière du camion et l'ouverture du bâtiment débouchant sur le quai, que ce soit pour se protéger des intempéries ou pour maintenir la chaîne du froid. Les sas d'étanchéité connus présentent en effet généralement une profondeur standard (environ 600 mm pour la plupart) qui s'avère le plus souvent insuffisante pour tenir compte de l'éloignement supplémentaire du camion provenant de la mise en oeuvre de butoirs plus profonds (500 mm).

Par ailleurs, la mise en oeuvre de butoirs de 500 mm exige de recourir à un niveleur spécifique, pourvu d'une lèvre plus longue que les lèvres standard, afin là encore de compenser l'éloignement supplémentaire du véhicule occasionné par la profondeur plus importante des butoirs. La mise en oeuvre d'une telle lèvre allongée n'est pas sans poser de nombreux inconvénients. Ainsi, dans le cas d'un niveleur à lèvre basculante (qui est une technologie très répandue car habituellement moins onéreuse et moins encombrante verticalement que la technologie des niveleurs à lèvre télescopique), l'allongement de la lèvre (nécessité par la profondeur accrue des butoirs) entraîne de *facto* un accroissement de l'encombrement vertical du niveleur, ce qui rend ce dernier incompatible avec les dimensions des fosses standard dans lesquelles sont montés les niveleurs à lèvres basculantes connus. Ceci a pour conséquence que de tels niveleurs à lèvre basculante devront être remplacés, si de nouveaux butoirs plus profonds sont installés pour améliorer le niveau de sécurité du quai, par des niveleurs à lèvres télescopiques de conception spéciale, qui s'avèrent plus chers et moins pratiques.

Les objets assignés à l'invention visent par conséquent à remédier aux différents inconvénients énumérés précédemment et à proposer un nouvel équipement de sécurité, conçu pour équiper un quai de chargement/déchargement routier, qui permet d'améliorer de manière extrêmement simple, fiable et économique le niveau de sécurité dudit quai, et qui se prête notamment particulièrement bien aux opérations de rénovation d'installations existantes.

Un autre objet de l'invention vise à proposer un nouvel équipement de sécurité, conçu pour équiper un quai de chargement/déchargement routier, qui répond aux préconisations les plus sévères en matière de sécurité des personnes.

Un autre objet de l'invention vise à proposer un nouvel équipement de sécurité, conçu pour équiper un quai de chargement/déchargement routier, qui est de conception très simple et robuste.

Un autre objet de l'invention vise à proposer un nouvel équipement de sécurité, conçu pour équiper un quai de chargement/déchargement routier, qui est particulièrement compact.

Un autre objet de l'invention vise à proposer un nouvel équipement de sécurité, conçu pour équiper un quai de chargement/déchargement routier, et qui est facilement adaptable à un quai existant déjà pourvu d'un niveleur de quai standard à lèvre basculante ou télescopique.

Un autre objet de l'invention vise à proposer un nouvel équipement de sécurité, conçu pour équiper un quai de chargement/déchargement routier, qui permet de mettre en oeuvre une procédure d'accostage du véhicule à charger/décharger particulièrement simple et préservant de façon optimale la sécurité des personnes.

Un autre objet de l'invention vise à proposer un nouveau système de chargement/déchargement sécurisé qui est de construction extrêmement simple, fiable et bon marché.

Un autre objet de l'invention vise à proposer un nouveau procédé de sécurisation d'un quai de chargement/déchargement routier, qui est extrêmement rapide et peu coûteux, et ne nécessite pas de modifier significativement le quai ni les autres équipements (niveleur, sas d'étanchéité ou autres) dont est éventuellement équipé le quai en question.

Un autre objet de l'invention vise à proposer un nouveau procédé de chargement/déchargement d'un véhicule routier, à partir d'un quai de chargement/déchargement routier, qui est extrêmement simple à mettre en oeuvre et ne requiert pas la présence d'opérateurs supplémentaires par rapport aux procédés existants, tout en améliorant significativement et à moindre coût la sécurité des personnes.

Les objets assignés à l'invention sont atteints à l'aide d'un équipement de sécurité conçu pour équiper un quai de chargement/déchargement routier, ledit quai comprenant un nez de quai qui s'élève sensiblement verticalement et en regard duquel un véhicule à charger/décharger est destiné à venir se positionner pour qu'une passerelle de transbordement mobile soit déployée entre le quai et le véhicule, ledit équipement de sécurité comprenant au moins un premier butoir pour le véhicule, conçu pour être fixé sur ledit nez de quai, ledit équipement de sécurité étant caractérisé en ce que ledit premier butoir est conçu pour être monté mobile relativement au nez de quai entre d'une part une configuration de sécurité dans laquelle il empêche ledit véhicule de s'approcher à moins d'une première distance dudit nez de quai et d'autre part une configuration de chargement/déchargement dans laquelle il permet audit véhicule de s'approcher à moins de ladite première distance dudit nez de quai, au moins une portion dudit premier butoir étant soumise, lors du mouvement du premier butoir entre ses configurations de sécurité et de chargement/déchargement, à un déplacement entre deux positions reliées par un vecteur de déplacement qui présente au moins une composante axiale perpendiculaire au nez de quai et/ou une composante horizontale perpendiculaire à la fois à ladite composante axiale et à la direction verticale, ledit premier butoir étant conçu pour que lesdits premier butoirs et passerelle de transbordement mobile puissent se déplacer indépendamment l'un de l'autre relativement au nez de quai, ledit premier butoir étant conçu pour que le départ du véhicule, une fois les opérations de transbordement terminées, permet de faire revenir ledit premier butoir en configuration de sécurité de façon automatique.

Les objets assignés à l'invention sont également atteints à l'aide d'un système de chargement/déchargement sécurisé comprenant :
- un quai de chargement/déchargement routier, ledit quai comprenant un nez de quai qui s'élève sensiblement verticalement et en regard duquel un véhicule à charger/décharger est destiné à venir se positionner,
- une passerelle de transbordement mobile destinée à être déployée entre le quai et le véhicule,
- au moins un premier butoir pour le véhicule, ledit premier butoir étant fixé sur ledit nez de quai,
caractérisé en ce que ledit premier butoir est monté mobile relativement au nez de quai entre d'une part une configuration de sécurité dans laquelle il empêche ledit véhicule de s'approcher à moins d'une première distance dudit nez de quai et d'autre part une configuration de chargement/déchargement dans laquelle il permet audit véhicule de s'approcher à moins de ladite première distance dudit nez de quai, au moins une portion dudit premier butoir étant soumise, lors du mouvement du premier butoir entre ses configurations de sécurité et de chargement/déchargement, à un déplacement entre deux positions reliées par un vecteur de déplacement qui présente au moins une composante axiale perpendiculaire au nez de quai et/ou une composante horizontale perpendiculaire à la fois à ladite composante axiale et à la direction verticale, lesdits premier butoir et passerelle de transbordement mobile étant conçus pour pouvoir se déplacer indépendamment l'un de l'autre relativement au nez de quai, ledit premier butoir étant conçu pour que le départ du véhicule, une fois les opérations de transbordement terminées, permet de faire revenir ledit premier butoir en configuration de sécurité de façon automatique.

Les objets assignés à l'invention sont également atteints à l'aide d'un procédé de sécurisation d'un quai de chargement/déchargement routier, ledit quai comprenant un nez de quai qui s'élève sensiblement verticalement et en regard duquel un véhicule à charger/décharger est destiné à venir se positionner pour qu'une passerelle de transbordement mobile soit déployée entre le quai et le véhicule, ledit procédé comprenant une étape de fixation audit nez de quai d'au moins un premier butoir pour le véhicule, ledit procédé de sécurisation étant caractérisé en ce qu'au cours de ladite étape de fixation du premier butoir, ce dernier est monté mobile relativement au nez de quai entre d'une part une configuration de sécurité dans laquelle il empêche ledit véhicule de s'approcher à moins d'une première distance dudit nez de quai et d'autre part une configuration de chargement/déchargement dans laquelle il permet audit véhicule de s'approcher à moins de ladite première distance dudit nez de quai, au moins une portion dudit premier butoir étant soumise, lors du mouvement du premier butoir entre ses configurations de sécurité et de chargement/déchargement, à un déplacement entre deux positions reliées par un vecteur de déplacement qui présente au moins une composante axiale perpendiculaire au nez de quai et/ou une composante horizontale perpendiculaire à la fois à ladite composante axiale et à la direction verticale, ledit premier butoir étant conçu pour que lesdits premier butoir et passerelle de transbordement puissent se déplacer indépendamment l'un de l'autre relativement au nez de quai, ledit premier butoir étant conçu pour que le départ du véhicule, une fois les opérations de transbordement terminées, permet de faire revenir ledit premier butoir en configuration de sécurité de façon automatique.

Les objets assignés à l'invention sont enfin atteints à l'aide d'un procédé de chargement/déchargement d'un véhicule routier à partir d'un quai de chargement/déchargement routier, ledit quai comprenant un nez de quai s'élevant sensiblement verticalement et en regard duquel un véhicule à charger/décharger est destiné à venir se positionner pour qu'une passerelle de transbordement mobile soit déployée entre le quai et le véhicule, au moins un premier butoir pour ledit véhicule routier étant fixé audit nez de quai, caractérisé en ce que ledit premier butoir est monté mobile relativement au nez de quai entre d'une part une configuration de sécurité dans laquelle il empêche ledit véhicule de s'approcher à moins d'une première distance dudit nez de quai et d'autre part une configuration de chargement/déchargement dans laquelle il permet audit véhicule de s'approcher à moins de ladite première distance dudit nez de quai, ledit procédé comprenant successivement une étape d'accostage au cours de laquelle le véhicule routier se déplace en direction du nez de quai jusqu'à venir en butée contre le premier butoir alors que ce dernier est en configuration de sécurité, une étape d'effacement du premier butoir au cours de laquelle ledit premier butoir passe de sa configuration de sécurité à sa configuration de chargement/déchargement sans que ladite passerelle de transbordement mobile ne soit mise en mouvement, et une étape de mise en position de transbordement au cours de laquelle le véhicule se rapproche dudit nez de quai, ledit premier butoir étant conçu pour que le départ du véhicule, une fois les opérations de transbordement terminées, permet de faire revenir ledit premier butoir en configuration de sécurité de façon automatique.

D'autres particularités et avantages de l'invention apparaîtront plus en détails à la lecture de la description détaillée qui suit, en référence aux dessins annexés, donnés à titre d'exemple purement illustratif et non limitatif, dans lesquels :
- La figure 1 illustre, selon une vue schématique en perspective, un système de chargement/déchargement sécurisé conforme à l'invention, comprenant un équipement de sécurité conforme à un premier mode de réalisation de l'invention et pourvu d'un premier butoir qui se trouve en configuration de sécurité.
- La figure 2 est identique à la figure 1 à la différence près que l'emplacement au sol destiné à accueillir le véhicule à charger/décharger n'a pas été représenté et que le premier butoir se trouve dans une configuration intermédiaire entre sa configuration de sécurité et sa configuration de chargement/déchargement.
- La figure 3 est identique à la figure 2 à la différence près que le premier butoir se trouve en configuration de chargement/déchargement.
- La figure 4 est une vue du premier butoir mis en oeuvre dans la variante des figures 1 à 3, dans sa configuration de sécurité.
- La figure 5 est identique à la figure 4 à la différence près que le premier butoir se trouve dans une configuration intermédiaire qu'il adopte lorsqu'il passe de sa configuration de sécurité à sa configuration de chargement/déchargement et vice-versa.
- La figure 6 illustre le premier butoir des figures 4 et 5 dans sa configuration de chargement/déchargement.
- La figure 7 illustre, selon une vue schématique en perspective, un système de chargement/déchargement sécurisé selon l'invention, pourvu d'un équipement de sécurité conforme à un deuxième mode de réalisation de l'invention, ledit équipement de sécurité comprenant un premier butoir qui est illustré en configuration de sécurité.
- La figure 8 illustre le système de chargement/déchargement de la figure 7 avec cette fois le premier butoir en configuration de chargement/déchargement.
- La figure 9 illustre, selon une vue en perspective, un système de chargement/déchargement sécurisé selon l'invention pourvu d'un équipement de sécurité conforme à un troisième mode de réalisation de l'invention et qui comprend un premier butoir représenté en configuration de sécurité.
- La figure 10 illustre le système de chargement/déchargement de la figure 9 avec le premier butoir représenté cette fois en configuration de chargement/déchargement.
- La figure 11 est identique à la figure 10 à la différence près que le premier butoir se trouve dans une configuration alternative de chargement/déchargement.
- La figure 12 illustre, en vue schématique de dessus, un troisième mode de réalisation d'un système de chargement/déchargement sécurisé selon l'invention pourvu d'un équipement de sécurité conforme à un quatrième mode de réalisation de l'invention, avec le premier butoir représenté en configuration de sécurité.
- La figure 13 est identique à la figure 12 à la différence près qu'elle représente en plus, de manière schématique, un véhicule qui vient en butée contre le premier butoir en configuration de sécurité, dans le cadre d'une étape d'accostage.
- La figure 14 illustre le système des figures 12 et 13 avec le premier butoir en configuration de chargement/déchargement, le véhicule s'étant rapproché du nez de quai pour procéder au chargement/déchargement.
- La figure 15 illustre, selon une vue en perspective, le premier butoir des figures 4 à 6 dans sa configuration de sécurité (en traits pleins) et dans sa configuration de chargement/déchargement (en pointillés).
- La figure 16 illustre, selon une vue en perspective, le premier butoir des figures 7 et 8 dans sa configuration de sécurité (en traits pleins) et dans sa configuration de chargement/déchargement (en pointillés).
- La figure 17 illustre, selon une vue de côté, le premier butoir des figures 9 et 11 dans sa configuration de sécurité (en traits pleins) et dans une configuration intermédiaire (en pointillés) entre sa configuration de sécurité et sa configuration de chargement/déchargement représentée à la figure 11.
- La figure 18 illustre, selon une vue de dessus, le premier butoir des figures 12 à 14 dans sa configuration de sécurité (en traits pleins) et dans sa configuration de chargement/déchargement (en pointillés).

L'invention concerne, selon un premier aspect, un équipement de sécurité conçu pour équiper un quai 1 de chargement/déchargement routier. De manière connue en soi, le quai 1 est conçu pour former une interface entre l'intérieur d'un bâtiment, pourvu d'une ouverture qui débouche sur le quai 1, et un véhicule routier 4 situé à l'extérieur du bâtiment en question et destiné à être chargé de marchandises contenues dans le bâtiment ou au contraire être déchargé de marchandises qui seront stockées (au moins temporairement) dans le bâtiment. Le quai 1 comprend de manière classique un nez de quai 2 s'élevant sensiblement verticalement et en regard duquel le véhicule 4 à charger/décharger est destiné à venir se positionner pour qu'une passerelle de transbordement mobile soit déployée entre le quai 1 et le véhicule 4. De manière connue en soi, le nez de quai 2 est formé d'une paroi plane qui s'élève verticalement à partir d'un emplacement au sol 3 destiné à accueillir le véhicule 4 à charger/décharger. L'emplacement 3 en question s'étend ainsi jusqu'au pied du nez de quai 2, le sommet dudit nez de quai 2 se trouvant à une altitude correspondant à celle du plancher du bâtiment à partir duquel ont lieu les opérations de chargement/déchargement. Le quai 1 comprend ainsi un plancher fixe 5 qui s'étend sensiblement perpendiculairement au nez de quai 2, à partir du sommet de ce dernier.

La passerelle de transbordement mobile est conçue pour établir entre le quai 1 et le véhicule 4 un plancher continu surplombant l'espace vide séparant le nez de quai 2 du véhicule 4, pour permettre l'accès à l'intérieur de ce dernier à partir du quai 1. La passerelle de transbordement mobile peut être de tout type connu. Selon une première variante, la passerelle de transbordement mobile peut être totalement indépendante à la fois du quai 1 et du véhicule 4, et se présenter par exemple sous la forme d'une simple plaque volante qu'un opérateur (chauffeur ou autre) dispose manuellement entre le quai 1 et le véhicule 4. Il est également envisageable que la passerelle de transbordement mobile soit issue du quai 1 et/ou du véhicule 4. Par exemple, la passerelle de transbordement peut comprendre un hayon déployable monté mobile sur le véhicule 4, à l'arrière de ce dernier, un éventuel dénivellement entre le véhicule 4 et le hayon pouvant être compensé grâce aux suspensions réglables équipant avantageusement le véhicule 4. Selon un autre exemple, qui est illustré aux figures, la passerelle de transbordement mobile est montée sur le quai 1. Le quai 1 comprend par exemple dans ce cas un niveleur 6 de quai pourvu d'un plancher mobile 7 formant ladite passerelle de transbordement mobile entre le véhicule 4 à charger/décharger et le quai 1. De préférence, le niveleur 6 est installé dans une fosse de forme sensiblement parallélépipédique ménagée à la fois dans le plancher fixe 5 et le nez 2 du quai 1. La fosse en question accueille un châssis et un mécanisme d'actionnement, par exemple hydraulique, disposés sous une plaque métallique formant une rampe basculante 7A. Cette dernière s'étend par exemple entre un bord arrière 70A et un bord avant 71 A. Lorsque le niveleur 6 est en position de repos (comme illustré aux figures), la rampe basculante 7A s'étend horizontalement, dans la continuité du plancher fixe 5, avec son bord avant 71A sensiblement dans le plan du nez de quai 2. De préférence, le mécanisme d'actionnement précité est conçu pour pouvoir faire pivoter la rampe 7A de façon que le bord arrière 70A reste sensiblement dans le plan du plancher fixe 5 tandis que le bord avant 71A se soulève au-dessus du plancher fixe 5 pour compenser un éventuel dénivellement entre le plancher fixe 5 et le plateau du véhicule 4. La rampe 7A est ainsi conçue pour évoluer entre sa position de repos, dans laquelle elle se trouve sensiblement dans le plan du plancher fixe 5, et une multitude de positions déployées dans lesquelles la rampe 7A est plus ou moins inclinée relativement au plancher fixe 5. Le niveleur 6 comprend également avantageusement une lèvre 7B qui s'étend à partir du bord avant 71A de la rampe 7A. La lèvre 7B peut par exemple être une lèvre basculante (comme illustrée aux figures) auquel cas elle est articulée à la rampe 7A au niveau du bord avant 71A de cette dernière, de façon à pouvoir pivoter, selon un axe de rotation parallèle au bord avant 71A, entre une position verticale de repos (illustrée aux figures) et une position complètement déployée dans laquelle elle vient se positionner dans la continuité de la rampe 7A, dans le même plan que cette dernière. Il est également tout à fait envisageable, sans pour autant sortir du cadre de l'invention, que la lèvre 7B ne soit pas basculante mais plutôt télescopique, auquel cas elle évolue par coulissement, parallèlement au plan de la rampe 7A, entre une position complètement rétractée dans laquelle elle est rangée sous la rampe 7A, et une position complètement déployée dans laquelle elle dépasse du bord avant 71A de la rampe 7A et prolonge ainsi cette dernière. La lèvre 7B permet de compenser la distance existant entre le véhicule à charger/décharger et le nez de quai 2, afin de permettre l'établissement d'un plancher continu entre le quai 1 et le véhicule 4 à charger/décharger, ledit plancher continu étant formé en l'espèce du plancher fixe 5 et du plancher mobile 7 formé lui-même par la rampe 7A et la lèvre 7B.

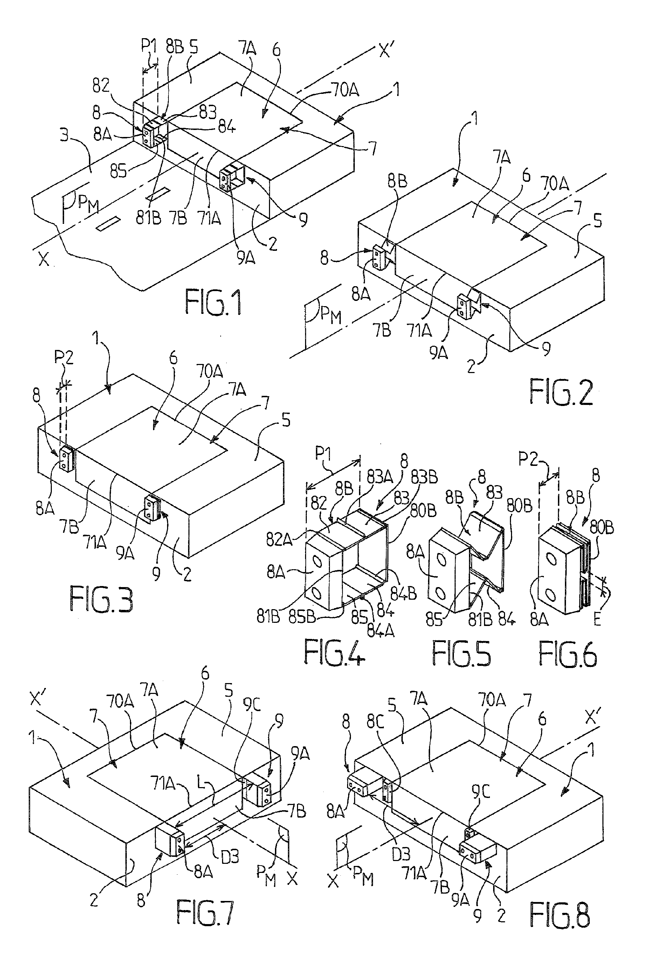

L'équipement de sécurité selon l'invention comprend au moins un premier butoir 8 pour le véhicule 4 à charger/décharger. Comme illustré aux figures, le premier butoir 8 est conçu pour être fixé sur le nez de quai 2, de façon à faire saillie de la surface de ce dernier. Le premier butoir 8 est ainsi fixé directement sur le nez de quai 2, de façon à surplomber l'emplacement au sol 3. De préférence, comme illustré aux figures, l'équipement de sécurité selon l'invention comprend en plus du premier butoir 8 un deuxième butoir 9 pour ledit véhicule 4, ledit deuxième butoir 9 étant lui aussi conçu pour être fixé sur le nez de quai 2. De préférence, comme illustré aux figures, le premier butoir 8 et le deuxième butoir 9 sont conçus pour être disposés de part et d'autre et à équidistance d'un plan vertical médian P_{M} perpendiculaire au nez de quai 2 et passant par le milieu de ce dernier. De façon encore plus préférentielle, et comme illustré aux figures, le premier et le deuxième butoir 8, 9 sont disposés à la surface du nez de quai 2 de part et d'autre de la fosse accueillant le niveleur 6. Il est cependant tout à fait envisageable que l'équipement de sécurité ne comprenne qu'un seul butoir, formé par exemple par une pièce en U destinée à entourer la fosse accueillant le niveleur 6, ou même que ledit équipement de sécurité comprenne plus de deux butoirs (par exemple trois, quatre ou plus). Dans ce qui suit, pour des raisons de simplicité et de concision de description, seules les variantes préférentielles mettant en oeuvre deux butoirs (premier et deuxième butoirs 8, 9) seront décrites. Le premier butoir 8 est conçu pour être monté mobile relativement au nez de quai 2, de façon que le premier butoir 8, tout en étant en permanence directement solidaire du nez de quai 2 (lequel constitue en l'espèce un bâti fixe, immobile relativement à l'emplacement 3), présente une faculté de mobilité relativement audit nez de quai 2. Le premier butoir 8 est ainsi conçu pour être monté mobile entre d'une part une configuration de sécurité (illustrée aux figures 1, 4, 7, 9, 12 et 13) dans laquelle il empêche ledit véhicule 4 à charger/décharger de s'approcher à moins d'une première distance D1 dudit nez de quai 2 et d'autre part une configuration de chargement/déchargement (illustrée aux figures 3, 6, 8, 10, 11 et 14) dans laquelle le premier butoir 8 permet audit véhicule 4 de s'approcher à moins de ladite première distance D1 dudit nez de quai 2. Ainsi, dans sa configuration de sécurité, le premier butoir 8 forme un obstacle interposé entre le nez de quai 2 et le véhicule 4 et capable bien entendu de résister à une éventuelle poussée exercée par le véhicule 4, de sorte que le véhicule 4 est empêché au moins localement de s'approcher à moins d'une distance prédéterminée (première distance D1) dudit nez de quai 2, puisque ledit véhicule 4 vient localement en butée contre le premier butoir 8. Avantageusement, comme illustré aux figures, la première distance D1 correspond à la valeur P1 de la profondeur du premier butoir 8, c'est-à-dire la longueur dudit premier butoir 8 mesurée à partir du nez de quai 2 parallèlement au plan vertical médian P_{M}. Au contraire, dans sa configuration de chargement/déchargement, le premier butoir 8 est positionné et/ou conformé de telle sorte qu'il permet au véhicule 4 de s'approcher, au moins localement, à une deuxième distance D2 dudit nez de quai 2, ladite deuxième distance D2 étant inférieure à la première distance D1. Avantageusement, dans sa configuration de sécurité, le premier butoir 8 forme une excroissance qui fait saillie du nez de quai 2 selon une profondeur P1 au moins égale à 500 mm, de façon à pouvoir ménager un refuge anti-écrasement pour une personne humaine (chauffeur de poids lourd, chef de quai ...) qui serait coincée entre le nez de quai 2 et le véhicule 4. Dans les exemples illustrés aux figures, le deuxième butoir 9 est également conçu pour être monté mobile relativement au nez de quai 2 entre d'une part une configuration de sécurité dans laquelle il empêche le véhicule 4 de s'approcher, au moins localement, à moins d'une première distance D1 du nez de quai 2 et d'autre part une configuration de chargement/déchargement dans laquelle il permet audit véhicule 4 de s'approcher à moins de ladite première distance D1 dudit nez de quai 2.

Avantageusement, l'équipement de sécurité selon l'invention est conçu pour que les premier et deuxième butoirs 8, 9 soient simultanément dans la même configuration, c'est-à-dire que lorsque le premier butoir 8 est en configuration de sécurité le deuxième butoir 9 est également en configuration de sécurité, tandis que lorsque le premier butoir 8 est en configuration de chargement/déchargement, le deuxième butoir 9 est également en configuration de chargement/déchargement. Avantageusement, comme illustré aux figures, le premier butoir 8 et le deuxième butoir 9 présentent chacun, lorsqu'ils sont dans leur configuration de sécurité respective, une même profondeur P1, de préférence au moins égale à 500 mm. Dans ce mode de réalisation avantageux, l'équipement de sécurité ménage un espace libre entre le premier butoir 8 et le deuxième butoir 9, ledit espace libre formant un refuge anti-écrasement 10 qui est délimité par le nez de quai 2, le véhicule 4 et les premier et deuxième butoirs 8, 9. Avantageusement, comme illustré aux figures, les premier et deuxième butoirs 8, 9 sont conçus, lorsqu'ils sont tous deux en configuration de sécurité, pour être séparés d'une distance L qui est sensiblement égale à la largeur de la passerelle de transbordement mobile (i.e. du plancher mobile 7 dans les exemples illustrés), laquelle largeur correspond sensiblement à la longueur du bord avant 71A. Dans ce mode de réalisation avantageux, les premier et deuxième butoirs 8, 9 bordent au plus près le niveleur 6, ce qui garantit qu'ils formeront bien un obstacle pour un véhicule adapté aux dimensions du niveleur 6, c'est-à-dire un véhicule 4 présentant une largeur L0 qui est supérieure ou égale à la distance L séparant le premier et le deuxième butoirs 8, 9. Avantageusement, l'équipement de sécurité selon l'invention comprend un actionneur, qui peut être par exemple de nature hydraulique, électrique, mécanique ou autre, conçu pour faire passer le premier butoir 8 (et le cas échéant le deuxième butoir 9) de sa configuration de sécurité à sa configuration de chargement/déchargement et vice-versa. L'actionneur en question (non représenté) est de préférence placé sous la dépendance d'un organe de commande (bouton, manette ou autre) contrôlable, de préférence manuellement, par un utilisateur (chef de quai, chauffeur du véhicule, etc.). Dans ce mode de réalisation, le passage du premier butoir 8 de sa configuration de sécurité à sa configuration de chargement/déchargement est réalisé sans utiliser le véhicule 4 lui-même, mais au moyen de l'actionneur susvisé.

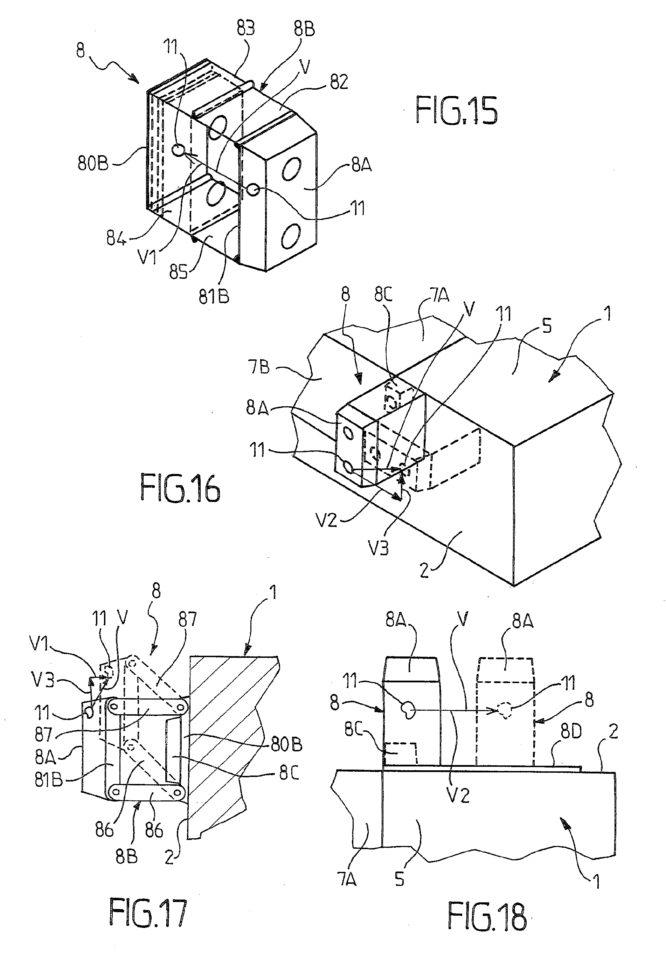

Conformément à l'invention, et comme cela ressort plus précisément des figures 15 à 17, au moins une portion 11 du premier butoir 8 est soumise, lors du mouvement du premier butoir 8 entre ses configurations de sécurité et de chargement/déchargement, à un déplacement entre au moins deux positions (respectivement illustrées en traits pleins et en traits pointillés aux figures 15 à 17) reliées par un vecteur de déplacement V qui présente au moins une composante axiale V1 perpendiculaire au nez de quai 2 et/ou une composante horizontale V2 perpendiculaire à la fois à ladite composante axiale V1 et à la direction verticale. En d'autres termes, lors du passage du premier butoir 8 de sa configuration de sécurité à sa configuration de chargement/déchargement (et inversement), une portion 11 du premier butoir 8, et éventuellement la totalité du premier butoir 8, subit un déplacement dont au moins une fraction présente soit une composante axiale V1, soit une composante horizontale V2, soit les deux. Un tel déplacement permet un effacement du premier butoir 8 devant le véhicule 4, permettant à ce dernier de s'approcher un peu plus du nez de quai 2, en vue de procéder aux opérations de chargement/déchargement, selon une procédure originale qui sera décrite plus en détails ci-après. Le premier butoir 8 est ainsi soumis, lorsqu'il passe de sa configuration de sécurité à sa configuration de chargement/déchargement (et réciproquement) à un mouvement qui n'est pas un mouvement de translation verticale pure, c'est-à-dire à un mouvement qui comprend au moins une composante autre que verticale.

Conformément à l'invention, le premier butoir 8 est conçu pour que lesdits premier butoir 8 et passerelle de transbordement mobile (formé par le plancher mobile 7 dans les exemples illustrés) puissent se déplacer indépendamment l'un de l'autre relativement au nez de quai 2. Cela signifie en particulier que le montage du premier butoir 8 sur le nez de quai 2 est réalisé de telle façon que ledit premier butoir 8 peut se déplacer sans que cela n'entraîne forcément un déplacement de la passerelle de transbordement (et donc du plancher mobile 7 dans l'exemple illustré aux figures), et réciproquement qu'un déplacement de la passerelle de transbordement (et donc du plancher mobile 7 dans les exemples illustrés) n'entraîne pas de déplacement du premier butoir 8. En particulier, le premier butoir 8 est conçu pour pouvoir passer de sa configuration de sécurité à sa configuration de chargement/déchargement, et de préférence de sa configuration de chargement/déchargement à sa configuration de sécurité, alors que la passerelle de transbordement (formé de préférence par le plancher mobile 7) reste immobile relativement au nez de quai 2. Réciproquement, la passerelle de transbordement (formé par exemple par le plancher mobile 7) peut tout à fait, dans le cadre de l'invention, se déplacer (par exemple passer d'une configuration de stockage à une position déployée fonctionnelle) alors que le premier butoir 8 reste immobile. Grâce à cet indépendance du premier butoir 8 et de la passerelle de transbordement (*i.e.* du plancher mobile 7 dans les exemples illustrés), il est notamment possible de mettre en oeuvre une procédure de chargement/déchargement extrêmement simple et sûre qui peut consister par exemple, comme cela sera exposé plus en détails ci-après, à faire tout d'abord s'approcher le véhicule 4 jusqu'à ce qu'il vienne en butée contre le premier butoir 8 alors que ce dernier est en configuration de sécurité, le plancher mobile 7 étant quant à lui en position de repos, puis à faire passer le premier butoir 8 de sa configuration de sécurité à sa configuration de chargement/déchargement alors que le plancher mobile 7 est toujours en position de repos, à faire se rapprocher le véhicule du nez de quai alors que le plancher mobile 7 est toujours en position de repos, et enfin à manoeuvrer le plancher mobile 7 pour créer un plancher d'accès au véhicule 4 à partir du quai 1. Cette indépendance permet de contrôler de façon séparée la sécurité au pied du nez de quai 2 (par action sur la configuration du premier butoir 8) et au sommet du nez de quai 2 (par action sur la passerelle de transbordement), ce qui permet de garantir un niveau optimal de sécurité dans toutes les phases du processus d'approche du véhicule et d'installation de la rampe de chargement/déchargement. Ce niveau optimal de sécurité est en outre obtenu de façon extrêmement simple, sans qu'il ne soit nécessaire de recourir à du matériel complexe et/ou spécifique. Avantageusement, le mécanisme d'actionnement du niveleur 6 est ainsi indépendant de l'actionneur du premier butoir 8, l'organe de commande (bouton, manette ou autre) du mécanisme d'actionnement du niveleur 6 étant de la même façon indépendant de l'organe de commande (bouton, manette ou autre) de l'actionneur du premier butoir 8, de sorte que l'utilisateur a à sa disposition deux organes distincts qui lui permettent de piloter de façon totalement indépendante le niveleur 6 de quai d'une part et le premier butoir 8 (ainsi qu'avantageusement le deuxième butoir 9 comme exposé précédemment).

Le premier butoir 8 est en outre avantageusement conçu pour que le départ du véhicule 4, une fois les opérations de transbordements terminés, permette de faire revenir le premier butoir 8 en configuration de sécurité de façon automatique. Dans le cas préférentiel (illustré aux figures) où l'équipement de sécurité comprend un premier butoir 8 et un deuxième butoir 9, le départ du véhicule 4, une fois les opérations de transbordement terminés permet de faire revenir lesdits premier et deuxième butoirs 8, 9 en configuration de sécurité de façon automatique.

Cela signifie que le déplacement opéré par le véhicule 4 pour quitter sa position de transbordement, dans laquelle il est avantageusement en butée contre le premier butoir 8 (ainsi que le cas échéant le deuxième butoir 9) en configuration de chargement / déchargement, entraîne concomitamment le retour automatique du premier butoir 8 (et le cas échéant du deuxième butoir 9) en configuration de sécurité.

Cette fonctionnalité permet en particulier de garantir un niveau de sécurité optimal. En effet, grâce à cette caractéristique le premier butoir 8 et le cas échéant le deuxième butoir 9) revient en configuration de sécurité en réponse au départ du véhicule 4, de sorte qu'il n'existe pas de temps de latence, correspondant à une situation potentiellement dangereuse, entre le moment où le véhicule 4 est reparti (après les opérations de transbordement) et le moment où le premier butoir 8 est ramené en configuration de sécurité. De plus, le caractère automatique du retour en configuration de sécurité permis par le départ du véhicule 4 évite tout risque lié à une éventuelle erreur humaine, qui pourrait par exemple découler de l'oubli d'un opérateur d'actionner le premier butoir 8 (et le cas échéant le deuxième butoir 9) pour le faire venir en configuration de sécurité une fois les opérations de transbordement terminés et le véhicule 4 reparti.

Avantageusement, afin de mettre en oeuvre ce retour automatique en configuration de sécurité, le premier butoir 8 est soumis en permanence à une force de rappel (qui est de préférence une force de rappel élastique) qui le rappelle en configuration de sécurité. Cela signifie que dans ce mode de réalisation avantageux, le premier butoir 8 (de même que le deuxième butoir 9 le cas échéant) a tendance à revenir spontanément et en permanence dans sa configuration de sécurité, en l'absence de sollicitation le contraignant à demeurer en configuration de chargement / déchargement. A cet effet, l'équipement de sécurité comprend avantageusement un organe de rappel élastique, par exemple un ressort (ressort hélicoïdal, lame-ressort ou autre), conçu pour être interposé (directement ou indirectement) entre ladite au moins une portion 11 dudit premier butoir 8 et le nez de quai 2 pour rappeler en permanence ledit butoir 8 en configuration de sécurité, en exerçant directement ou indirectement sur ladite portion 11 un effort de rappel. Par exemple, dans le mode de réalisation de la figure 15, un ressort de rappel est interposé entre une portion interne 80B fixée au nez de quai 2 et une portion externe 81 B opposée portant une butée 8A contre laquelle le véhicule 4 est destiné à venir en appui lors de l'opération de chargement / déchargement.

Dans ce qui précède, il a été évoqué le recours à un actionneur pour faire passer le premier butoir 8 de sa configuration de sécurité à sa configuration de chargement / déchargement et vice-versa. Alternativement, selon un mode de réalisation particulièrement intéressant, le premier butoir 8 est conçu pour passer de sa configuration de sécurité à sa configuration de chargement / déchargement sous l'effet d'un effort (de préférence un effort de poussée en direction du nez de quai 2) exercé directement par le véhicule 4 sur le premier butoir 8. Par exemple, dans le mode de réalisation illustrée à la figure 15, le premier butoir 8 est conçu pour passer de sa configuration de sécurité à sa configuration de chargement / déchargement sous l'effet d'un effort de poussée exercé par le véhicule 4 sur une butée 8A mobile du premier butoir 8 (comme décrite plus en détails ci-après) selon une direction sensiblement perpendiculaire au nez de quai 2. Sous l'effet de cette poussée, la butée 8A se déplace selon une trajectoire sensiblement rectiligne en direction du nez de quai 2, à l'encontre de la force de rappel exercée préférentiellement par l'organe de rappel élastique jusqu'à ce que le premier butoir 8 (et le cas échéant le deuxième butoir 9) se trouve en configuration de chargement / déchargement, configuration dans laquelle il est maintenu par le véhicule 4, à l'encontre de la force de rappel élastique exercé par le ressort.

Bien entendu, lorsque le camion repart une fois les opérations de chargement / déchargement terminées, le premier butoir 8 revient alors automatiquement et spontanément (sous l'effet de la force de rappel élastique) en configuration de sécurité, concomitamment au départ du véhicule 4.

De préférence, l'équipement de sécurité comprend un organe de verrouillage activable / désactivable conçu :
- pour empêcher lorsqu'il est activé, le premier butoir 8 de passer de sa configuration de sécurité à sa configuration de chargement / déchargement sous l'effet dudit effort exercé directement par le véhicule 4 sur ledit premier butoir 8 ;
- et pour autoriser, lorsqu'il est désactivé, le premier butoir 8 à passer de sa configuration de sécurité à sa configuration de chargement / déchargement sous l'effet dudit effort exercé directement par le véhicule 4 sur ledit premier butoir 8.

L'organe de verrouillage activable / désactivable constitue ainsi une pièce de blocage qui empêche notamment, dans son état activé, le libre déplacement de la portion 11 susvisée. Bien entendu, l'organe de verrouillage activable / désactivable est conçu pour résister, lorsqu'il est activé, à un effort exercé par le véhicule 4 sur le premier butoir 8, en vue de bloquer le premier butoir 8 en configuration de sécurité et de l'empêcher d'atteindre sa configuration de chargement / déchargement sous l'effet de la sollicitation mécanique produite par le véhicule 4.Bien entendu, la conception d'un tel organe de verrouillage activable / désactivable est tout à fait classique et l'homme du métier dispose d'une multitude de possibilités techniques bien connues en tant que telles pour bloquer efficacement en configuration de sécurité le premier butoir 8, notamment lorsqu'il est conforme aux différents modes de réalisation illustrés aux figures.

Avantageusement, ledit organe de verrouillage activable / désactivable est un organe de verrouillage à réarmement automatique conçu pour revenir automatiquement dans son état activé en réponse au retour dudit premier butoir 8 en configuration de sécurité à partir de la configuration de chargement / déchargement. En d'autres termes, dans ce mode de réalisation préférentiel, l'organe de verrouillage est conçu pour que le passage (automatique) du premier butoir 8 de sa configuration de chargement / déchargement à sa configuration de sécurité entraine le passage de l'organe de verrouillage de son état désactivé à son état activé par tout moyen connu (entrainement mécanique, électrique, magnétique...).

Ainsi, dans ce mode de réalisation particulièrement avantageux, l'équipement de sécurité peut fonctionner de la façon suivante :
- le véhicule 4 (camion ou autre) recule en marche arrière jusqu'à venir en butée contre les premier et deuxième butoirs 8, 9 qui se trouvent à cet instant dans leur configuration de sécurité respective ;
- un opérateur (chef de quai, chauffeur ou autre) vérifie alors que personne ne se trouve dans le refuge anti-écrasement ménagé par les premier et deuxième butoirs 8, 9 au droit du nez de quai 2, entre le nez de quai 2 et le véhicule 4 ; cette vérification peut également être effectuée de manière entièrement automatique, à l'aide d'un détecteur de présence (par exemple de nature optique, mécanique ou autre) ;
- si l'absence de toute personne humaine dans le refuge anti-écrasement est constatée, l'organe de verrouillage est désactivé (en réponse à une action manuelle d'un opérateur ou d'une commande automatique répondant au détecteur de présence) ; le véhicule 4 peut alors continuer de reculer tout en poussant sur les premier et deuxième butoirs 8, 9, de façon à forcer ces derniers à atteindre leur configuration de chargement / déchargement, à l'encontre de la force de rappel élastique exercée par le ressort et rappelant lesdits butoirs en configuration de sécurité ;
- les opérations de transbordement peuvent alors avoir lieu, étant entendu que le plancher mobile 7 aura été si nécessaire déployé auparavant pour établir un accès entre le quai 1 et l'intérieur du véhicule 4 à charger / décharger.
- Une fois les opérations de transbordement terminées, le véhicule 4 repart en marche avant, de sorte qu'il ne maintient plus les premier et deuxième butoirs 8, 9 en configuration de chargement / déchargement ; les premier et deuxième butoirs 8, 9 reviennent alors automatiquement, sous l'effet de la force de rappel élastique exercée par le ressort, en configuration de sécurité du fait de la disparition de la sollicitation mécanique de maintien exercée par le véhicule 4 ; ce retour automatique en configuration de sécurité s'accompagne du retour automatique de l'organe de verrouillage / déverrouillage dans son état activé.

Avantageusement, conformément au mode de réalisation des figures 1 à 6, 9 à 11, 15 et 17, le premier butoir 8 forme une excroissance qui fait saillie du nez de quai 2 selon une profondeur qui est plus importante lorsque le premier butoir 8 est en configuration de sécurité (la profondeur présente alors une valeur P1) que lorsqu'il est en configuration de chargement/déchargement (la profondeur présente alors une valeur P2 inférieure à P1). Dans ce cas, le premier butoir 8 se déploie et se rétracte avantageusement selon la direction axiale X-X' perpendiculaire au nez de quai 2. Par exemple, comme illustré aux figures 1 à 6 et 15 d'une part et 9 à 11 et 17 d'autre part, le premier butoir 8 comprend avantageusement une butée 8A et une structure articulée ou déformable 8B s'étendant, de préférence selon la direction axiale X-X', entre une portion interne 80B fixée au nez de quai 2 et une portion externe 81 B opposée portant ladite butée 8A. Dans les exemples illustrés aux figures, la structure 8B est en l'occurrence une structure articulée, qui comprend différents éléments rigides reliés entre eux par des articulations (charnières ou autre). Il est cependant parfaitement envisageable que la structure ne soit pas articulée mais uniquement déformable (avec par exemple mise en oeuvre d'un élément gonflable/dégonflable), ou bien soit à la fois articulée et déformable. La structure articulée ou déformable 8B est avantageusement conçue pour évoluer entre une configuration déployée illustrée aux figures 1, 4, 9, 15 (en traits pleins) et 17 (en traits pleins) correspondant à la configuration de sécurité du premier butoir 8 et une configuration rétractée illustrée aux figures 3, 6, 10, 11, 15 (en pointillés) et 17 (en pointillés) correspondant à la configuration de chargement/déchargement du premier butoir 8, l'écartement entre ladite portion externe 81 B et le nez de quai 2 étant plus important en configuration déployée qu'en configuration rétractée. De cette façon, lorsque la structure articulée ou déformable 8B est en configuration déployée, la butée 8A, qui est portée par la portion externe 81 B, se trouve devant le nez de quai 2, à une distance qui est plus importante que lorsque la structure articulée ou déformable 8B est en configuration rétractée. Conformément au mode de réalisation des figures 1 à 6 et 15, ladite structure articulée ou déformable 8B est conçue pour que ladite butée 8A soit soumise à un déplacement uniquement en translation rectiligne selon une direction X-X' perpendiculaire au nez de quai 2 (direction axiale) lorsque ledit premier butoir 8 passe de sa configuration de sécurité à sa configuration de chargement/déchargement. De préférence, la structure articulée ou déformable 8B est également conçue pour que ladite butée 8A soit soumise à un déplacement uniquement en translation rectiligne selon une direction perpendiculaire au nez de quai 2 lorsque ledit premier butoir 8 passe de sa configuration de chargement/déchargement à sa configuration de sécurité. Dans ce mode de réalisation préférentielle, la butée 8A est soumise, lors du mouvement du premier butoir 8 entre ses configurations de sécurité et de chargement/déchargement, à un déplacement entre deux positions (correspondant respectivement à la configuration de sécurité et à la configuration de chargement/déchargement) reliées par un vecteur de déplacement V qui présente, comme illustré à la figure 15, uniquement une composante axiale V1 perpendiculaire au nez de quai 2, c'est-à-dire parallèle à la direction axiale X-X'. Ce mode de réalisation est particulièrement avantageux du fait de sa compacité et de sa simplicité (qui provient en particulier du fait qu'une seule et même butée 8A fait office de surface d'appui pour le véhicule 4 tant en configuration de sécurité qu'en configuration de chargement/déchargement, ce qui n'est par exemple pas la cas dans les variantes des figures 7, 8 et 16 d'une part et 12 à 14 et 18 d'autre part). De préférence, comme illustré aux figures 1 à 6 et 15, la structure articulée ou déformable 8B comprend :
- une platine arrière (formant en l'espèce la portion interne 80B) qui est conçue pour être fixée (par exemple par vissage) sur le nez de quai 2,
- une platine avant (formant en l'espèce la portion externe 81 B) disposée parallèlement à la platine arrière et portant la butée 8A,
- une pluralité de volets 82, 83, 84, 85 articulés les uns aux autres et disposés entre lesdites platines avant et arrière pour former une structure en accordéon.

Par exemple, dans la variante des figures 1 à 6 et 15, la platine arrière formant portion interne 80B est constituée par une plaque métallique rectangulaire et la platine avant est constituée par une plaque rectangulaire identique, lesdites plaques rectangulaires s'étendant parallèlement l'une à l'autre, et étant disposées en face l'une de l'autre selon la direction axiale X-X'. La structure articulée ou déformable 8B comprend quant à elle un premier volet 82 qui s'étend entre une extrémité avant reliée à la platine avant par une charnière 82A et une extrémité arrière reliée à l'extrémité avant d'un deuxième volet 83 par une deuxième charnière 83A, l'extrémité arrière du deuxième volet 83 étant quant à elle reliée par une troisième charnière 83B au bord supérieur de la plaque formant la platine arrière. La structure articulée ou déformable 8B comprend également un troisième et un quatrième volet 84, 85 agencés de façon symétrique au premier et deuxième volet 82, 83 par rapport à un plan horizontal médian perpendiculaire aux plaques formant les portions interne 80B et externe 81 B et passant par le milieu desdites plaques. La structure articulée ou déformable 8B est ainsi conçue pour que dans la configuration de sécurité (figure 4), le premier volet 82 et le deuxième volet 83 soient disposés dans la continuité l'un de l'autre, de façon à s'inscrire dans un plan moyen sensiblement perpendiculaire au nez de quai 2, tandis que dans la configuration de chargement/déchargement (figure 6) les charnières médiane 83A, 84A soient rapprochées d'un écartement minimal E, le premier volet 82 et le deuxième volet 83 étant rabattus et plaqués l'un contre l'autre, de même que les troisième et quatrième volets 84, 85 (cf. figure 6). Le passage de la configuration de sécurité à la configuration de chargement/déchargement s'effectue ainsi par repliement vers l'intérieur des volets 82, 83, 84, 85, de façon à rapprocher progressivement les charnières médianes 83A, 84A jusqu'à une distance minimale (écartement minimal E). De façon alternative, il est bien entendu tout à fait envisageable que le repliement s'effectue vers l'extérieur au lieu de l'intérieur, de façon que le passage de la configuration de sécurité à la configuration de chargement/déchargement corresponde à un écartement progressif des charnières médianes 83A, 84A jusqu'à un écartement maximal (et non minimal comme précédemment). Un tel mode de réalisation alternatif présente toutefois l'inconvénient que les volets 82, 83, 84, 85 font alors saillie vers le haut et vers le bas en configuration de chargement/déchargement, ce qui est moins favorable du point de vue de la sécurité, de la fiabilité, et bien entendu de la compacité. Le passage de la configuration de sécurité à la configuration de chargement/déchargement est avantageusement obtenu grâce à un actionneur qui exerce par exemple une poussée axiale sur la butée 8A. Cet actionneur peut être par exemple électrique (moteur électrique) ou hydraulique (vérin) ou même pneumatique, l'invention n'étant bien entendu absolument pas limitée à un type d'actionneur spécifique. La structure articulée ou déformable 8B permet ainsi, à partir de la configuration de chargement/déchargement (figure 6), de projeter la butée 8A (laquelle se présente par exemple sous la forme d'un bloc de matière plastique) en avant de la surface du nez de quai 2, ou inversement d'attirer vers la surface du nez de quai 2 la butée 8A lors du passage de la configuration de sécurité (cf. figure 4) à la configuration de chargement/déchargement (figure 6).

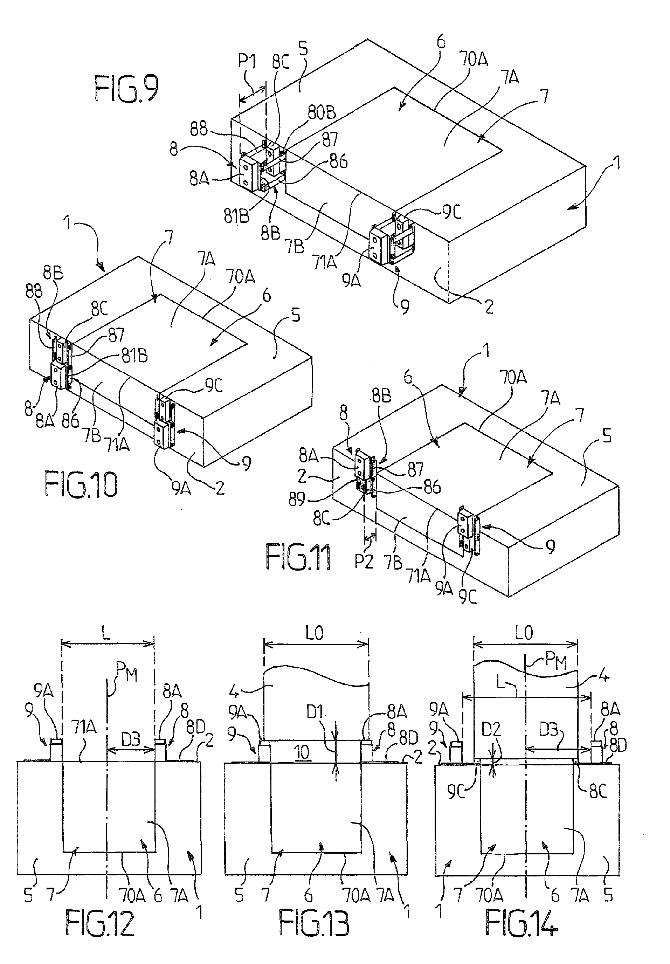

Le mode de réalisation illustré aux figures 9 à 11 est basé sur ce même principe, à la différence près que le mouvement opéré par le premier butoir 8 est différent. Ainsi, dans ce mode de réalisation, la structure articulée ou déformable 8B est conçue pour que la butée 8A soit soumise à un déplacement en translation circulaire lorsque ledit premier butoir 8 passe de sa configuration de sécurité à sa configuration de chargement/déchargement. A cet effet, la structure articulée ou déformable 8B comprend par exemple :
- une platine arrière formant une portion interne 80B conçue pour être fixée sur le nez de quai 2, par exemple par vissage,
- une platine avant, formant en l'espèce la portion externe 81 B, disposée parallèlement à la platine arrière et portant la butée 8A,
- au moins une biellette 86 reliant les platines arrière et avant.

De préférence, et comme illustré aux figures 9 à 11, la structure articulée ou déformable 8B comprend quatre biellettes 86, 87, 88, 89. Lesdites biellettes 86, 87, 88, 89 sont en l'espèce associées deux à deux pour former deux parallélogrammes déformables disposés l'un à côté de l'autre. Cette variante permet ainsi à la butée 8A d'atteindre une position d'écartement maximal relativement au nez de quai 2, correspondant à la configuration déployée de la structure articulée ou déformable 8B (et donc à la configuration de sécurité), dans laquelle les biellettes 86, 87, 88, 89 s'étendent toutes sensiblement perpendiculairement au nez de quai 2, parallèlement les unes aux autres. Lors du passage du premier butoir 8 de la configuration de sécurité (cf. figure 9) à la configuration de chargement/déchargement (cf. figure 10 ou figure 11), la butée 8A est soumise à un déplacement entre deux positions (illustrées par exemple à la figure 17 respectivement en traits pleins et en pointillés) reliées par un vecteur de déplacement V qui présente en l'espèce, du fait du mouvement de translation circulaire subi par la butée 8A, à la fois une composante axiale V1 ainsi qu'une composante verticale V3 (cf. figure 17). Le mouvement de translation circulaire peut s'effectuer, lors du passage de la configuration de sécurité de la configuration de chargement/déchargement, soit vers le bas (variante de la figure 10), soit vers le haut (variante de la figure 11), jusqu'à ce que la butée 8A vienne s'appuyer contre le nez de quai 2 à une altitude respectivement inférieure ou supérieure à celle à laquelle elle se trouvait en configuration de sécurité. La variante de la figure 10 est préférée car elle permet à la butée 8A de ne pas faire saillie du plancher 5 en configuration de chargement/déchargement, ce qui peut présenter un certain nombre d'inconvénients en matière de robustesse et de sécurité.

Avantageusement, l'équipement de sécurité comprend une butée annexe 8C qui est conçue pour être attachée de façon fixe au nez de quai 2, de façon à être interposée entre la butée 8A et le nez de quai 2 lorsque le premier butoir 8 se trouve en configuration de sécurité (figure 9 et figure 17 en traits pleins). Ainsi, lorsque le premier butoir 8 est en configuration de sécurité, la butée annexe 8C se trouve masquée derrière la butée 8A, qui forme une surface d'appui pour le véhicule 4. Au contraire, lorsque la butée 8A s'efface, sous l'effet de son déplacement en translation circulaire pour atteindre une position rétractée correspondant à la configuration de chargement/déchargement, l'espace se trouvant au droit de la butée annexe 8C, selon la direction axiale X-X', est dégagé, de sorte que la butée annexe 8C peut alors servir de surface de butée pour le véhicule 4.

Les variantes alternatives des figures 7, 8 et 16 d'une part, et 12 à 14 et 18 d'autre part, vont maintenant être décrites plus en détails. Selon ces variantes, le premier butoir 8 est monté mobile sur le nez de quai 2 de façon que la distance D3 entre d'une part au moins une portion du premier butoir 8 (et de préférence la totalité du premier butoir 8) et d'autre part un plan vertical médian P_{M} perpendiculaire au nez de quai 2 et passant par le milieu de ce dernier, parallèlement donc à la direction axiale X-X', soit plus grande en configuration de chargement/déchargement (figure 8, 14 et 16 en traits pointillés) qu'en configuration de sécurité (figures 7, 12 et 13), de façon à ménager entre le véhicule 4 et le nez de quai 2 un espace libre de largeur suffisante pour permettre au véhicule 4 de se rapprocher du nez de quai 2. Dans ce mode de réalisation, le vecteur de déplacement V comporte donc au moins une composante horizontale V2, comme illustré aux figures 16 et 18. Bien entendu, ce mode de réalisation peut être mis en oeuvre selon de très nombreuses variantes, deux d'entres elles étant illustrées aux figures.

Ainsi, selon la variante des figures 7, 8 et 16, le premier butoir 8 est monté au moins à rotation sur le nez de quai 2, autour d'un axe de rotation perpendiculaire au nez de quai 2 et parallèle à la direction axiale X-X'. Dans ce mode de réalisation, le premier butoir 8 est conçu pour subir en particulier une rotation à 90° de façon à passer d'une orientation verticale (configuration de sécurité) à une orientation horizontale et ainsi faciliter le dégagement d'une butée annexe 8C, fixée au nez de quai 2 et disposée en retrait relativement à la butée 8A. Plus précisément, le premier butoir 8 comporte une pièce monobloc s'étendant entre une extrémité attachée au nez de quai 2 et une extrémité libre pourvue d'une butée 8A, laquelle est soumise, lors du passage de la configuration de sécurité à la configuration de chargement/déchargement, à un déplacement entre deux positions (illustrées respectivement en traits pleins et en pointillés à la figure 16) reliées par un vecteur de déplacement V qui présente une composante horizontale V2 et une composante verticale V3.

Quant au mode de réalisation des figures 12 à 14 et 18, il met en oeuvre un premier butoir 8 monté à coulissement sur le nez de quai 2 pour se déplacer en translation horizontale, parallèlement au nez de quai 2, entre ses configurations de sécurité et de chargement/déchargement. Plus précisément, cette variante met également en oeuvre un premier butoir 8 formé d'une pièce monobloc s'étendant entre une extrémité attachée au nez de quai 2 et une extrémité libre portant une butée 8A, ladite butée 8A étant soumise, lors du passage du premier butoir 8 de sa configuration de sécurité à sa configuration de chargement/déchargement, à un déplacement entre deux positions reliées par un vecteur de déplacement V qui présente en l'espèce uniquement une composante horizontale V2 parallèle au nez de quai 2, et perpendiculaire à la fois à la direction axiale X-X' et à la direction verticale. De préférence, l'équipement comprend à cet effet un dispositif de guidage 8D (du genre rail, gorge ou autre) destiné à être fixé au nez de quai 2 (ou ménagé dans ce dernier) et un coulisseau solidaire du premier butoir 8 (de préférence au niveau de l'extrémité opposée à celle portant la butée 8A) et coulissant de façon captive dans le dispositif de guidage 8D, parallèlement au nez de quai 2. La variante des figures 12 à 14 et 18 met également en oeuvre une butée annexe 8C conçue pour être attachée de façon fixe au nez de quai 2, de façon à être masquée derrière la butée 8A, qui forme une surface d'appui pour le véhicule 4 en configuration de sécurité. Au contraire, lorsque la butée 8A s'efface, sous l'effet de son déplacement en translation latérale pour atteindre une position déportée correspondant à la configuration de chargement/déchargement, l'espace se trouvant au droit de la butée annexe 8C, selon la direction axiale X-X', est dégagé, de sorte que la butée annexe 8C peut alors servir de surface de butée pour le véhicule 4, comme illustré à la figure 14.

Avantageusement, dans chacune des variantes des figures 7, 8 et 16 d'une part, et 12 à 14 et 18 d'autre part, le passage du premier butoir 8 de sa configuration de sécurité à sa configuration de chargement/déchargement correspond à un écartement latéral de la butée 8A, qui s'éloigne du plan vertical médian P_{M} afin de ne plus se trouver sur la trajectoire du véhicule 4 et s'effacer ainsi devant ce dernier, en découvrant une butée annexe 8C conçue pour être encastrée sur le nez de quai 2, de sorte que la butée annexe 8C peut alors faire office, en configuration de chargement/déchargement, de surface de butée pour le véhicule 4

Dans l'ensemble des exemples exposés ci-avant et illustrés aux figures, l'équipement selon l'invention comprend un deuxième butoir 9, comme déjà évoqué dans ce qui précède. De préférence, le deuxième butoir 9 est similaire, dans sa fonctionnalité générale, au premier butoir 8. Cela signifie qu'au moins une portion du deuxième butoir 9 est soumise, lors du mouvement du deuxième butoir 9 entre ses configurations de sécurité et de chargement/déchargement, à un déplacement entre deux positions reliées par un vecteur de déplacement qui présente au moins une composante axiale perpendiculaire au nez de quai 2, et/ou une composante horizontale perpendiculaire à la fois à ladite composante axiale et la direction verticale, ledit deuxième butoir 9 étant conçu pour que lesdits deuxième butoir 9 et passerelle de transbordement mobile (plancher mobile 7 dans les exemples illustrés) puissent se déplacer indépendamment l'un de l'autre relativement au nez de quai 2. Dans les variantes des figures 1 à 6 et 15 d'une part, et 9 à 11 et 17 d'autre part, le deuxième butoir 9 est avantageusement strictement identique au premier butoir 8, lesdits premier et deuxième butoirs 8, 9 fonctionnant en outre avantageusement de façon simultanée, de façon à se trouver sensiblement en même temps dans leur configuration de sécurité et dans leur configuration de chargement/déchargement. La mise en oeuvre de deux butoirs 8, 9 identiques présente bien entendu un intérêt en matière de standardisation, et donc de coût. Il est également envisageable, comme dans le cas des variantes des figures 7, 8 et 16 d'une part, et 12 à 14 et 18 d'autre part, que les premier et deuxième butoirs 8, 9 ne soient pas strictement identiques mais présentent plutôt un caractère symétrique, en l'espèce relativement au plan vertical médian P_{M}. Dans ce cas de figure, chacun des premier et deuxième butoirs 8, 9 est conçu pour s'écarter simultanément du plan vertical médian P_{M} lors du passage de sa configuration de sécurité à sa configuration de chargement/déchargement. Ainsi, la distance L séparant les premier et deuxième butoirs 8, 9 (et qui correspond au double de la distance D3) est-elle plus importante lorsque les premier et deuxième butoirs 8, 9 se trouvent tous deux en configuration de chargement/déchargement que lorsqu'ils se trouvent tous deux en configuration de sécurité. Comme illustré aux figures, la distance L qui sépare les premier et deuxième butoirs 8, 9 en configuration de chargement/déchargement est sensiblement supérieure à la largeur L0 du véhicule 4 à charger/décharger, ce qui permet à ce dernier de s'approcher du nez de quai 2, en pénétrant dans l'espace situé entre les butées 8A, 9A des premier et deuxième butoirs 8, 9, pour venir en appui frontal contre les butées annexes 8C, 9C. L'équipement décrit dans ce qui précède permet ainsi d'équiper un quai 1 de chargement/déchargement routier en vue de le sécuriser, que ce soit dans un contexte de rénovation, où il s'agit de transformer un quai 1 existant pour en améliorer la sécurité, ou dans un contexte de nouvelle réalisation où il s'agit de construire un quai 1 neuf.

L'invention concerne bien entendu également en tant que tel un système de chargement/déchargement sécurisé comprenant :
- un quai 1 de chargement/déchargement routier, ledit quai 1 étant conforme à la description qui précède et comprenant donc un nez de quai 2 qui s'élève sensiblement verticalement et en regard duquel un véhicule 4 à charger/décharger est destiné à venir se positionner, ledit quai 1 comprenant éventuellement, comme illustré, un niveleur 6 de quai pourvu d'un plancher mobile 7,
- une passerelle de transbordement mobile destinée à être déployée entre le quai 1 et le véhicule 4, ladite passerelle étant par exemple formée par ledit plancher mobile 7,
- et au moins un équipement de sécurité conforme à la description qui précède.

Le système de chargement / déchargement sécurisé comprend donc au moins un premier butoir 8 conforme à la description qui précède, pour le véhicule 4 à charger/décharger, ledit premier butoir 8 étant fixé sur ledit nez de quai 2 et monté mobile relativement au nez de quai 2, entre d'une part sa configuration de sécurité et d'autre part sa configuration de chargement / déchargement, lesdits premier butoir 8 et passerelle de transbordement mobile étant conçus pour pouvoir se déplacer indépendamment l'un de l'autre relativement au nez de quai 2.

Ledit premier butoir 8 du système de chargement / déchargement sécurisé conforme à l'invention est également conçu pour que le départ du véhicule 4, une fois les opérations de transbordement terminées, permette de faire revenir ledit premier butoir 8 en configuration de sécurité de façon automatique, comme exposé en détails dans ce qui précède.

Bien entendu, l'ensemble de la description qui précède, dédiée à l'équipement de sécurité, est valable pour le système de chargement/déchargement complet (incluant le quai 1, la passerelle de transbordement mobile et l'équipement de sécurité).

L'invention concerne par ailleurs en tant que tel un procédé de sécurisation d'un quai 1 de chargement/déchargement routier, conforme à la description qui précède. Le procédé de sécurisation selon l'invention comprend une étape de fixation, audit nez de quai 2, d'au moins un premier butoir 8 conforme à la description qui précède, au cours de laquelle ledit premier butoir 8 est monté mobile relativement au nez de quai 2 entre d'une part sa configuration de sécurité et d'autre part sa configuration de chargement/déchargement. Le procédé de sécurisation d'un quai 1 selon l'invention consiste ainsi à pourvoir un quai 1 existant, pourvu d'un plancher mobile 7, d'un équipement de sécurité conforme à la description qui précède. De préférence, lorsqu'il s'agit d'une opération de rénovation d'un quai 1 comprenant au moins un butoir fixe attaché au nez de quai, le procédé de sécurisation comprend avantageusement, préalablement à ladite étape de fixation susvisée, une étape de dépose dudit butoir fixe, en vue de le remplacer par le premier butoir 8 selon l'invention.

Enfin, l'invention concerne également en tant que tel un procédé de chargement/déchargement d'un véhicule routier 4 à partir d'un quai 1 de chargement/déchargement routier conforme à la description qui précède. Dans le cadre du procédé de chargement/déchargement conforme à l'invention, au moins un premier butoir 8 pour ledit véhicule routier 4 est fixé au nez de quai 2, ledit premier butoir 8 étant conforme à la description qui précède, c'est-à-dire qu'il est monté mobile relativement au nez de quai 2 entre d'une part une configuration de sécurité (décrite précédemment) dans laquelle il empêche ledit véhicule 4 de s'approcher à moins d'une première distance D1 dudit nez de quai 2 et d'autre part une configuration de chargement/déchargement (également décrite en détails dans ce qui précède) dans laquelle il permet audit véhicule 4 de s'approcher à moins de ladite première distance D1 dudit nez de quai 2. Le procédé de chargement/déchargement conforme à l'invention comprend en outre successivement une étape d'accostage (illustrée par exemple à la figure 13) au cours de laquelle le véhicule routier 4 se déplace en direction du nez de quai 2 jusqu'à venir en butée contre le premier butoir 8 alors que ce dernier est en configuration de sécurité, une étape d'effacement du premier butoir 8 au cours de laquelle ledit premier butoir 8 passe de sa configuration de sécurité à sa configuration de chargement/déchargement sans que ladite passerelle de transbordement mobile ne soit mise en mouvement (c'est-à-dire, dans les exemples illustrés, sans que ledit plancher mobile 7 ne soit mis en mouvement), et une étape de mise en position de transbordement (illustrée à la figure 14) au cours de laquelle le véhicule 4 se rapproche dudit nez de quai 2.

Le premier butoir 8 est bien entendu là encore conçu pour que le départ du véhicule 4, une fois les opérations de transbordement terminées, permette de faire revenir ledit premier butoir 8 en configuration de sécurité de façon automatique. Ainsi, le procédé de chargement / déchargement conforme à l'invention comprend avantageusement une étape de réarmement du premier butoir 8 dans laquelle le départ du véhicule 4 fait revenir automatiquement (c'est-à-dire sans intervention humaine directe), le premier butoir 8 en configuration de sécurité. Cela signifie que ce retour automatique en configuration de sécurité est provoqué directement par le départ du véhicule 4.

De préférence, lors de l'étape d'effacement du premier butoir 8, au moins une portion 11 dudit premier butoir 8 est soumise, lors du mouvement du premier butoir 8 entre ses configurations de sécurité et de chargement/déchargement, à un déplacement entre deux positions reliées par un vecteur de déplacement V qui présente au moins une composante axiale V1 perpendiculaire au nez de quai 2 et/ou une composante horizontale V2 perpendiculaire à la fois à ladite composante axiale V1 et à la direction verticale, comme exposé dans ce qui précède. De préférence, le procédé de chargement/déchargement selon l'invention comprend également une étape de vérification, par un opérateur, de l'absence de toute personne humaine entre le véhicule 4 et le nez de quai 2, ladite étape de vérification se déroulant après l'étape d'accostage et avant l'étape d'effacement du premier butoir 8. Ainsi, la procédure mise en oeuvre dans le cadre de l'invention pour charger/décharger le véhicule routier 4 peut se dérouler de la façon suivante :
- Le véhicule routier 4 (camion ou autre) recule en marche arrière jusqu'à venir en butée contre les premier et deuxième butoirs 8, 9 comme illustré à la figure 13. A cet instant, les premier et deuxième butoirs 8, 9 se trouvent tous deux dans leur configuration de sécurité respective, de sorte que l'espace 10 situé au droit du nez de quai 2, entre les premier et deuxième butoirs 8, 9, est suffisant pour former un refuge anti-écrasement.
- Un opérateur (chef de quai, chauffeur ou autre) vérifie alors que personne ne se trouve dans le refuge anti-écrasement en question. A cet instant, le plancher mobile 7 n'a toujours pas été mis en mouvement par l'opérateur.
- Si l'absence de toute personne humaine dans le refuge anti-écrasement est constatée, l'opérateur actionne alors les premier et deuxième butoirs 8, 9 de façon à ce qu'ils atteignent leur configuration de chargement/déchargement. Dans le cas des variantes des figures 1 à 6 et 9 à 11, cela se traduit par une rétractation axiale des butées 8A, 9A en direction du nez de quai 2, tandis que dans les variantes des autres figures, cela se traduit par un décalage latéral vers l'extérieur des premier butoir 8 et deuxième butoir 9, comme exposé précédemment ;
- Le véhicule 4 recule alors jusqu'à atteindre une position de transbordement (visible sur la figure 14) dans laquelle il vient en butée soit contre des butées annexes 8C, 9C qui ont été dégagés du fait du passage en configuration de chargement/déchargement des premier et deuxième butoirs 8, 9 (variantes des figures 7 à 14 et 16 à 18) soit contre les butées 8A, 9A qui se sont rapprochées du nez de quai 2 sous l'effet du passage des premier et deuxième butoirs 8, 9 de leur configuration de sécurité à leur configuration de chargement/déchargement (variante des figures 1 à 6 et 15) ;
- L'opérateur actionne ensuite le mécanisme du plancher mobile 7 qui se déplace et se déploie pour établir un accès entre le quai 1 et l'intérieur du véhicule 4 à charger/décharger.
- Les opérations de transbordement peuvent alors avoir lieu.
- Une fois les opérations de transbordement terminées, le véhicule 4 repart en marche avant, ce qui permet de faire revenir les premier et deuxième butoirs 8, 9 en configuration de sécurité, soit de façon automatique soit en réponse à une commande de l'opérateur.

L'invention permet ainsi d'augmenter de manière très significative et à moindre coût le niveau de sécurité des quais de chargement/déchargement routiers.

## Revendications

1. - Equipement de sécurité conçu pour équiper un quai (1) de chargement/déchargement routier, ledit quai (1) comprenant un nez de quai (2) qui s'élève sensiblement verticalement et en regard duquel un véhicule (4) à charger/décharger est destiné à venir se positionner pour qu'une passerelle de transbordement mobile soit déployée entre le quai (1) et le véhicule (4), ledit équipement de sécurité comprenant au moins un premier butoir (8) pour le véhicule (4), conçu pour être fixé sur ledit nez de quai (2), ledit équipement de sécurité étant **caractérisé en ce que** ledit premier butoir (8) est conçu pour être monté mobile relativement au nez de quai (2) entre d'une part une configuration de sécurité dans laquelle il empêche ledit véhicule (4) de s'approcher à moins d'une première distance (D1) dudit nez de quai (2) et d'autre part une configuration de chargement/déchargement dans laquelle il permet audit véhicule (4) de s'approcher à moins de ladite première distance (D1) dudit nez de quai (2), au moins une portion (11) dudit premier butoir (8) étant soumise, lors du mouvement du premier butoir (8) entre ses configurations de sécurité et de chargement/déchargement, à un déplacement entre deux positions reliées par un vecteur de déplacement (V) qui présente au moins une composante axiale (V1) perpendiculaire au nez de quai (2) et/ou une composante horizontale (V2) perpendiculaire à la fois à ladite composante axiale (V1) et à la direction verticale, ledit premier butoir (8) étant conçu pour que lesdits premier butoirs (8) et passerelle de transbordement mobile puissent se déplacer indépendamment l'un de l'autre relativement au nez de quai (2), ledit premier butoir (8) étant conçu pour que le départ du véhicule (4), une fois les opérations de transbordement terminées, permette de faire revenir ledit premier butoir (8) en configuration de sécurité de façon automatique.

2. - Equipement de sécurité selon la revendication 1 **caractérisé en ce que** ledit premier butoir (8) est soumis en permanence à une force de rappel qui le rappelle en configuration de sécurité.

3. - Equipement de sécurité selon la revendication 2 **caractérisé en ce qu'**il comprend un organe de rappel élastique, par exemple un ressort, conçu pour être interposé entre ladite au moins une portion (11) dudit premier butoir (8) et le nez de quai (2) pour rappeler en permanence ledit premier butoir (8) en configuration de sécurité.

4. - Equipement de sécurité selon l'une des revendications 1 à 3 **caractérisé en ce qu'**il comprend un actionneur, par exemple de nature hydraulique, électrique, mécanique ou pneumatique, conçu pour faire passer le premier butoir (8) de sa configuration de sécurité à sa configuration de chargement/déchargement.

5. - Equipement de sécurité selon l'une des revendications 1 à 3 **caractérisé en ce que** le premier butoir (8) est conçu pour passer de sa configuration de sécurité à sa configuration de chargement/déchargement sous l'effet d'un effort exercé directement par le véhicule (4) sur ledit premier butoir (8).

6. - Equipement de sécurité selon la revendication 5 **caractérisé en ce qu'**il comprend un organe de verrouillage activable/désactivable conçu :
- pour empêcher, lorsqu'il est activé, le premier butoir (8) de passer de sa configuration de sécurité à sa configuration de chargement/déchargement sous l'effet dudit effort exercé directement par le véhicule (4) sur ledit premier butoir (8);
- et pour autoriser, lorsqu'il est désactivé, le premier butoir (8) à passer de sa configuration de sécurité à sa configuration de chargement/déchargement sous l'effet dudit effort exercé directement par le véhicule (4) sur ledit premier butoir (8).

7. - Equipement de sécurité selon la revendication 6 **caractérisé en ce que** ledit organe de verrouillage est un organe de verrouillage à réarmement automatique conçu pour revenir automatiquement dans son état activé en réponse au retour dudit premier butoir (8) en configuration de sécurité à partir de la configuration de chargement/déchargement.

8. - Equipement selon l'une des revendications 1 à 7 **caractérisé en ce que** dans sa configuration de sécurité, ledit premier butoir (8) forme une excroissance qui fait saillie du nez de quai (2) selon une profondeur (P1) au moins égale à 500 mm, de façon à pouvoir ménager un refuge anti-écrasement (10) pour une personne humaine qui serait coincé entre le nez de quai (2) et ledit véhicule (4).

9. - Equipement selon l'une des revendications 1 à 8 **caractérisé en ce que** ledit premier butoir (8) forme une excroissance qui fait saillie du nez de quai (2) selon une profondeur qui est plus importante lorsque le premier butoir (8) est en configuration de sécurité que lorsqu'il est en configuration de chargement/déchargement.

10. - Equipement selon l'une des revendications 1 à 9 **caractérisé en ce que** ledit premier butoir (8) comprend une butée (8A) et une structure articulée ou déformable (8B) s'étendant entre une portion interne (80B) fixée au nez de quai (2) et une portion externe (81 B) opposée portant ladite butée (8A), ladite structure articulée ou déformable (8B) étant conçue pour évoluer entre une configuration déployée correspondant à la configuration de sécurité et une configuration rétractée correspondant à la configuration de chargement/déchargement, l'écartement entre ladite portion externe (81 B) et le nez de quai (2) étant plus important en configuration déployée qu'en configuration rétractée, ladite structure articulée ou déformable (8B) comprenant :
- une platine arrière conçue pour être fixée sur le nez de quai (2),
- une platine avant disposée parallèlement à la platine arrière et portant ladite butée (8A),
- une pluralité de volets (82, 83, 84, 85) articulés les uns aux autres et disposés entre lesdites platines avant et arrière pour former une structure en accordéon.

11. -Equipement selon l'une des revendications 1 à 10 **caractérisé en ce que** ledit premier butoir (8) est monté mobile sur le nez de quai (2) de façon que la distance (D3) entre d'une part au moins une portion du premier butoir (8) et d'autre part un plan vertical médian (P_{M}) perpendiculaire au nez de quai (2) et passant par le milieu de ce dernier soit plus grande en configuration de chargement/déchargement qu'en configuration de sécurité.

12. - Equipement selon l'une des revendications 1 à 11 **caractérisé en ce qu'**il comprend un deuxième butoir (9) pour ledit véhicule (4), conçu pour être fixé sur ledit nez de quai (2), ledit deuxième butoir (9) étant conçu pour être monté mobile relativement au nez de quai (2) entre d'une part une configuration de sécurité dans laquelle il empêche ledit véhicule (4) de s'approcher à moins d'une première distance (D1) dudit nez de quai (2) et d'autre part une configuration de chargement/déchargement dans laquelle il permet audit véhicule (4) de s'approcher à moins de ladite première distance (D1) dudit nez de quai (2), au moins une portion dudit deuxième butoir (9) étant soumise, lors du mouvement du deuxième butoir (9) entre ses configurations de sécurité et de chargement/déchargement, à un déplacement entre deux positions reliées par un vecteur de déplacement qui présente au moins une composante axiale perpendiculaire au nez de quai (2) et/ou une composante horizontale perpendiculaire à la fois à ladite composante axiale et à la direction verticale, ledit deuxième butoir (9) étant conçu pour que lesdits deuxième butoir (9) et passerelle de transbordement mobile puissent se déplacer indépendamment l'un de l'autre relativement au nez de quai (2), le premier et le deuxième butoir (8, 9) étant conçus pour être disposés de part et d'autre et à équidistance d'un plan vertical médian (P_{M}) perpendiculaire au nez de quai (2) et passant par le milieu de ce dernier.

13. -Système de chargement/déchargement sécurisé comprenant :
- un quai (1) de chargement/déchargement routier, ledit quai (1) comprenant un nez de quai (2) qui s'élève sensiblement verticalement et en regard duquel un véhicule (4) à charger/décharger est destiné à venir se positionner,
- une passerelle de transbordement mobile destinée à être déployée entre le quai (1) et le véhicule (4),
- au moins un premier butoir (8) pour le véhicule (4), ledit premier butoir (8)
étant fixé sur ledit nez de quai (2),
**caractérisé en ce que** ledit premier butoir (8) est monté mobile relativement au nez de quai (2) entre d'une part une configuration de sécurité dans laquelle il empêche ledit véhicule (4) de s'approcher à moins d'une première distance (D1) dudit nez de quai (2) et d'autre part une configuration de chargement/déchargement dans laquelle il permet audit véhicule (4) de s'approcher à moins de ladite première distance (D1) dudit nez de quai (2), au moins une portion (11) dudit premier butoir (8) étant soumise, lors du mouvement du premier butoir (8) entre ses configurations de sécurité et de chargement/déchargement, à un déplacement entre deux positions reliées par un vecteur de déplacement (V) qui présente au moins une composante axiale (V1) perpendiculaire au nez de quai (2) et/ou une composante horizontale (V2) perpendiculaire à la fois à ladite composante axiale (V1) et à la direction verticale, lesdits premier butoir (8) et passerelle de transbordement mobile étant conçus pour pouvoir se déplacer indépendamment l'un de l'autre relativement au nez de quai (2), ledit premier butoir (8) étant conçu pour que le départ du véhicule (4), une fois les opérations de transbordement terminées, permette de faire revenir ledit premier butoir (8) en configuration de sécurité de façon automatique.

14. - Procédé de sécurisation d'un quai (1) de chargement/déchargement routier, ledit quai (1) comprenant un nez de quai (2) qui s'élève sensiblement verticalement et en regard duquel un véhicule (4) à charger/décharger est destiné à venir se positionner pour qu'une passerelle de transbordement mobile soit déployée entre le quai (1) et le véhicule (4), ledit procédé comprenant une étape de fixation audit nez de quai (2) d'au moins un premier butoir (8) pour le véhicule (4), ledit procédé de sécurisation étant **caractérisé en ce qu'**au cours de ladite étape de fixation du premier butoir (8), ce dernier est monté mobile relativement au nez de quai (2) entre d'une part une configuration de sécurité dans laquelle il empêche ledit véhicule (4) de s'approcher à moins d'une première distance (D1) dudit nez de quai (2) et d'autre part une configuration de chargement/déchargement dans laquelle il permet audit véhicule (4) de s'approcher à moins de ladite première distance (D1) dudit nez de quai (2), au moins une portion (11) dudit premier butoir (8) étant soumise, lors du mouvement du premier butoir (8) entre ses configurations de sécurité et de chargement/déchargement, à un déplacement entre deux positions reliées par un vecteur de déplacement (V) qui présente au moins une composante axiale (V1) perpendiculaire au nez de quai (2) et/ou une composante horizontale (V2) perpendiculaire à la fois à ladite composante axiale (V1) et à la direction verticale, ledit premier butoir (8) étant conçu pour que lesdits premier butoir (8) et passerelle de transbordement puissent se déplacer indépendamment l'un de l'autre relativement au nez de quai (2), ledit premier butoir (8) étant conçu pour que le départ du véhicule (4), une fois les opérations de transbordement terminées, permette de faire revenir ledit premier butoir (8) en configuration de sécurité de façon automatique.

15. - Procédé de chargement/déchargement d'un véhicule routier (4) à partir d'un quai (1) de chargement/déchargement routier, ledit quai (1) comprenant un nez de quai (2) s'élevant sensiblement verticalement et en regard duquel un véhicule (4) à charger/décharger est destiné à venir se positionner pour qu'une passerelle de transbordement mobile soit déployée entre le quai (1) et le véhicule (4), au moins un premier butoir (8) pour ledit véhicule routier (4) étant fixé audit nez de quai (2), **caractérisé en ce que** ledit premier butoir (8) est monté mobile relativement au nez de quai (2) entre d'une part une configuration de sécurité dans laquelle il empêche ledit véhicule (4) de s'approcher à moins d'une première distance (D1) dudit nez de quai (2) et d'autre part une configuration de chargement/déchargement dans laquelle il permet audit véhicule (4) de s'approcher à moins de ladite première distance (D1) dudit nez de quai (2), ledit procédé comprenant successivement une étape d'accostage au cours de laquelle le véhicule routier (4) se déplace en direction du nez de quai (2) jusqu'à venir en butée contre le premier butoir (8) alors que ce dernier est en configuration de sécurité, une étape d'effacement du premier butoir (8) au cours de laquelle ledit premier butoir (8) passe de sa configuration de sécurité à sa configuration de chargement/déchargement sans que ladite passerelle de transbordement mobile ne soit mise en mouvement, et une étape de mise en position de transbordement au cours de laquelle le véhicule (4) se rapproche dudit nez de quai (2), ledit premier butoir (8) étant conçu pour que le départ du véhicule (4), une fois les opérations de transbordement terminées, permette de faire revenir ledit premier butoir (8) en configuration de sécurité de façon automatique.
